# EUROPÄISCHE PATENTSCHRIFT

(11) **EP 0 625 489 B1**
(45) Veröffentlichungstag und Bekanntmachung des Hinweises auf die Patenterteilung: **04.03.1998**
(21) Anmeldenummer: 94107475.9
(22) Anmeldetag: 13.05.1994
(51) Int. Cl.: C04B 35/00, C04B 35/10, C08K 5/10

(54) **Giessmasse zur Herstellung von grünen Keramikfolien enthaltend Polyvinylalkohol-Fettsäureester als Dispergiermittel**
Casting mass for the production of green ceramic sheets containing polyvinyl alcohol-fatty acid ester as dispersant
Masse de coulée pour la production de feuilles céramiques en cru contenant comme dispersant un ester acide gras-alcool polyvinylique

(30) Priorität: 20.05.1993 DE 4316924
(43) Veröffentlichungstag der Anmeldung: 23.11.1994
(73) Patentinhaber: HOECHST AKTIENGESELLSCHAFT, 65929 Frankfurt am Main (DE)
(72) Erfinder: Hessel, Friedrich, Dr., D-55124 Mainz (DE); Seitz, Katharina, Dr., D-60596 Frankfurt (DE); Roosen, Andreas, Dr., D-65719 Hofheim (DE); Wegner, Gerhard, Prof. Dr., D-55127 Mainz (DE); Meyer, Wolfgang, Dr., D-55129 Mainz (DE); Sigmund, Wolfgang, Dr., D-70794 Filderstadt (DE)

(56) Entgegenhaltungen:
- EP-A- 0 346 073
- DE-A- 4 003 198

## Beschreibung

Die vorliegende Erfindung betrifft eine Gießmasse zur Herstellung von grünen Keramikfolien, die als Dispergiermittel Polyvinylalkohol-Fettsäureester enthält, sowie daraus hergestellte Formkörper.

Das Foliengießverfahren sieht im wesentlichen die Dispergierung von feinem keramischen und anorganischen Pulver in einem Dispersionsmedium vor, wobei gleichzeitig zweckmäßigerweise außerdem noch Bindemittel und Plastifiziermittel zugesetzt werden. Die so gebildete Gießmasse wird auf eine sich bewegende Trägeroberfläche gegossen und bildet dort eine Schicht mit möglichst gleichmäßiger Schichtdicke. Nach dem Verdampfen des Dispersionsmediums wird eine mehr oder minder flexible Folie erhalten, die durch Schneiden, Stanzen, Prägen oder Stapeln zu grünen Formteilen weiterverarbeitet werden kann, die Formteile werden dann anschließend einem Sinterprozeß unterworfen.

Der erste Schritt bei der Entwicklung eines Foliengießverfahrens ist die richtige Auswahl der entsprechenden organischen Additive zur Herstellung eines keramischen Schlickers, welcher die wichtigste Voraussetzung für die Produktion von qualitativ hochwertiger Keramik bildet.

Zum Erreichen einer hohen Packungsdicke der Pulverteilchen in der Grünfolie werden Dispergiermittel zu dem Pulver-Lösungsmittelgemisch gegeben. Durch die Belegung der Oberfläche der Pulver mit dem Dispergiermittel wird im Aufarbeitungsprozeß eine vollständige Deagglomerierung sowie eine Stabilisierung gegen Sedimentation erreicht. Der Aufbau eines Abstoßungspotentials der Teilchen untereinander führt zu einer niedrigen Schlickerviskosität bei gleichzeitig hohem Feststoffgehalt. Ein hoher Feststoffgehalt im keramischen Schlicker ergibt eine hohe Packungsdichte in der Grünfolie und damit eine niedrige Schwindung beim Brennen der Grünfolie zur Herstellung der keramischen Bauteile.

Für organische Lösungsmittel sind verschiedene Dispergiermittel bekannt. Häufig werden Naturprodukte oder abgewandelte Naturprodukte, z.B. Fischöl, eingesetzt (R.E. Mistler et al, Tape Casting of Ceramics, Wiley and Sons, New York, 1978). Diese Rohstoffe weisen jedoch schwankende Eigenschaften auf, weshalb synthethische Produkte gesucht sind, die diese Schwankungen nicht aufweisen.

Polyvinylakoholester sind in der Literatur bekannt.
So beschreibt beispielsweise die EP-A-0 144 155 die Verwendung eines Pfropfcopolymers auf der Basis eines Polyvinylalkoholpolymers zur Herstellung eines Agens, welches dazu dient Papier mit einem oberflächlichen Schutzüberzug zu überziehen.

Weiterhin bekannt ist der Einsatz von Polyvinylalkohol-Fettsäureestern als eß- bzw. genießbarer Fett- oder Ölersatz für Lebensmittel oder in der pharmazeutischen Industrie (EP-A-0 383 605).

In DE-A1-40 03 198 wird eine Gießmasse zur Herstellung von keramischen Grünfolien beschrieben, die als Binder ein Polyvinylbutyral enthält mit 13 bis 18 Gew.-% Vinylalkohol-Einheiten, mit 0 bis 2 Gew.-% Vinylacetat-Einheiten und mit einem Molekulargewicht von 30000 bis 40000. EP-A1-0 346 073 lehrt eine Schlicker-Zusammensetzung zur Fertigung von "non-whiteware ceramic articles" mit einem Polyalkylenpolyamin, das als Binder einzusetzen ist.

Aufgabe der vorliegenden Erfindung war es, eine Gießmasse bereitzustellen, welche mit gleichbleibender, reproduzierbarer, niedriger Viskosität hergestellt werden kann und sich dazu eignet, um nach dem Foliengießverfahren grüne Keramikfolien anzufertigen.

Die vorliegende Erfindung löst diese Aufgabe und betrifft eine Gießmasse zur Herstellung grüner Keramikfolien nach dem Foliengießverfahren, enthaltend ein keramisches Pulver, ein organisches Lösemittel, Binder, Weichmacher und Polyvinylalkohol-Fettsäurester mit einem Umsetzungsgrad ≥ 50 % als Dispergiermittel.

Polyvinylalkohol-Fettsäureester, die sich als Dispergiermittel für die erfindungsgemäße Gießmasse eignen, enthalten 8 bis 24, vorzugsweise 12 bis 18 Kohlenstoffatome, bezogen auf den Fettsäurerest, und können gesättigt oder einfach bis mehrfach ungesättigt sein.

Als Polyvinylalkohol können handelsübliche Produkte eingesetzt werden, wie z.B. ®Mowiol, Hoechst AG. Vorzugsweise werden teilhydrolysierte Typen mit einem Verseifungsgrad von 70 bis 92 % oder vollhydrolysierte Polyvinylalkohole mit einem Verseifungsgrad ≥ 98 % verwendet. Der Polymerisationsgrad liegt dabei insbesondere im Bereich von 250 bis 2000.

Durch die Wahl des Verhältnisses OH-Gruppe im Polymer zum Fettsäureanteil können Produkte mit vollständiger Umsetzung oder unvollständiger Umsetzung mit Fettsäuren erhalten werden. Auf diese Weise können freie OH-Gruppen im Polymer vorliegen. Der Umsetzungsgrad, d.h. das Verhältnis des Fettsäureanteils zu der Summe aus Fettsäureanteil plus freie OH-Gruppen im umgesetzten Polyvinylalkohol, beträgt erfindungsgemäß 50 bis 100 %. Produkte mit einem niedrigeren Umsetzungsgrad sind in den verwendeten Lösungsmitteln nur unvollständig löslich oder teilweise sogar unlöslich.

Als Fettsäure sind insbesondere Isostearinsäure, Laurinsäure, Linolensäure, Palmitinsäure, Stearinsäure, Ölsäure, Linolsäure und Arachinsäure zu nennen.

Die Umsetzung des Polyvinylalkols mit der Fettsäure erfolgt nach Methoden, die dem Polymerfachmann bekannt sind. Die Fettsäure, die in Form des Säurechlorids vorliegt, wird mit dem Polyvinylalkohol in Pyridin oder Triethylamin als Lösungsmittel unter Abtrennung des sich bildenden Amin/HCl-Salzes verestert oder die Fettsäure wird mit dem Polyvinylalkohol versetzt und azeotrop verestert.

Der Polyvinylalkohol-Fettsäureester wird in einer Menge von 0,5 bis 5 Gew.-%, bezogen auf das keramische Pulver, zugesetzt. Erfindungsgemäß können auch Gemische verschiedener Fettsäureester eingesetzt werden.

Als Lösungsmittel werden für die erfindungsgemäße Gießmasse vorzugweise flüchtige organische Lösungsmittel verwendet, wie z.B. Methanol, Ethanol, Isobutylalkohol, Methylethylketon, Trichlorethylen oder Toluol, sowie Gemische dieser Lösungsmittel. In einer bevorzugten Ausführungsform wird ein Gemisch von Trichlorethylen und Ethanol verwendet. Vorzugsweise beträgt der Lösungsmittelanteil, bezogen auf das Gesamtgewicht der Gießmasse, 15 bis 30 Gew.-%.

Als keramische Materialien, die sich für die erfindungsgemäße Gießmasse eignen, kommen Metalloxide oder -nichtoxide in Betracht, die üblicherweise in der Produktion keramischer Formteile für technische Anwendungen eine Rolle spielen. Die keramischen Pulver können sowohl alleine wie auch in Mischungen eingesetzt werden. Besonders typische Keramikpulver umfassen die Oxide, Karbide, Nitride, Boride und Sulfide von Lithium, Kalium, Beryllium, Magnesium, Bor, Aluminium, Silizium, Kupfer, Kalzium, Strontrium, Barium, Zink, Cadmium, Gallium, Indium, Titan, Zirkon, Wismut oder Mangan. Die genannten keramischen Pulver können erfindungsgemäß in der Gießmasse in Mengen von 60 bis 80 Gew.-%, vorzugsweise von 65 bis 75 Gew.-%, enthalten sein, bezogen jeweils auf das Gesamtgewicht der Gießmasse.

Die für die erfindungsgemäße Gießmasse geeigneten Binder werden in einer Menge von 2 bis 10 Gew.-%, bezogen auf das Gesamtgewicht der Gießmasse, zugesetzt. So können als Bindemittel beispielsweise Polyacrylate, Polymethacrylate oder Polyvinylformale verwendet werden, vorzugsweise findet Polyvinylbutyral Verwendung.

Weiterhin ist es zweckmäßig der Gießmasse Weichmacher zuzusetzen, z.B. Ester einer Dicarbonsäure, wie Phthalsäure, Adipinsäure oder Sebacinsäure mit aliphatischen und/oder aromatischen einwertigen Alkoholen, wie Butanol, Hexanol und Benzylalkohol oder Ester dieser Alkohole mit Phosphorsäure oder Ester von Monocarbonsäuren mit mehrwertigen Alkoholen. In einer bevorzugten Ausführungsform wird Dioctylphthalat verwendet, wobei dessen Anteil insbesondere 0,5 bis 5 Gew.-%, bezogen auf das Gesamtgewicht der Gießmasse, beträgt.

Die keramischen Pulverteilchen werden in Lösung durch die Polyvinylalkohol-Fettsäureester stabilisiert und so eine Sedimentation der Teilchen verhindert. Die erfindungsgemäße Gießmasse mit Polyvinylalkohol-Fettsäureestern als Dispergiermittel kann mit gleichbleibender, niedriger, reproduzierbarer Viskosität im Bereich von 1500 bis 20000 mPa·s, vorzugsweise 3000 bis 12000 mPa·s, gemessen bei einer Temperatur von 20 °C, hergestellt werden.

Durch Vergießen und Trocknen der erfindungsgemäßen Gießmasse, enthaltend ein feinteiliges anorganisches Pulver, ein organisches Lösungsmittel, einen Binder, einen Weichmacher und Polyvinylalkohol-Fettsäureester mit einem Umsetzungsgrad ≥ 50 % als Dispergiermittel werden keramische Folien mit einer hohen Gründichte und damit niedriger Sinterschwindung erhalten.

Durch thermische Behandlung und Sintern der so hergestellten Grünfolien können keramische Substrate hergestellt werden.

Die dispergierende Wirkung der Polyvinylalkohol-Fettsäureester soll nachfolgend anhand von Ausführungsbeispielen noch näher erläutert werden, ohne aber auf die konkret dargestellten Ausführungsformen beschränkt zu sein.

### Beispiel 1

4 Gew.-Teile Polyvinylalkohol(PVA)-Ester (PVA-Isostearinsäureester, Umsetzungsgrad 100 %, im IR keine OH-Bande zu beobachten) werden in 137 Gew.-Teilen Trichlorethylen/Ethanol (azeotropisches Gemisch) gelöst und 400 Gew.-Teile Al₂O₃ Pulver (d₅₀ 2,9 µm) zugefügt. Die Mischung wird über eine Zeit von 48 h in einer Kugelmühle aufbereitet. Der erhaltene Schlicker wird Vakuum entgast und die Viskosität bei 20 °C bestimmt ("Haake Rotovisko" Fa. Haake). Die Viskositätswerte für zwei verschiedene Schergeschwindigkeiten sind in Tabelle 1 aufgeführt.

### Beispiel 2

2 Gew.-Teile Polyvinylalkohol-Isostearinsäureester werden in 137 Gew.-Teilen Trichlorethylen/Ethanol gelöst, 400 Gew.-Teile Al₂O₃ zugefügt und wie in Beispiel 1 beschrieben aufbereitet und die Viskosität bestimmt.

### Beispiel 3

4 Gew.-Teile Fischöl (Menhaden Fischöl "Defloc Z3", Spencer Kellog Div. Textron Inc., Buffalo, N.Y.) werden wie in Beispiel 1 beschrieben mit 400 Gew.-Teilen Al₂O₃ in Trichlorethylen/Ethanol aufbereitet und die Viskosität bestimmt.

### Beispiel 4

137 Gew.-Teile Trichlorethylen/Ethanol als azeotropes Gemisch werden vorgelegt und mit 400 Gew.-Teilen Al₂O₃ wie in Beispiel 1 beschrieben aufbereitet (ohne Dispergiermittel). Das keramische Pulver sedimentiert sofort beim Stehenlassen des Schlickers, so daß eine Viskositätsmessung nicht möglich ist.

**Tabelle 1**

| Dispergierwirkung PVA-Ester Viskosität (in mPa·s) bei verschiedenen Schergeschwindigkeiten | | |
|---|---|---|
| | Viskosität [50 1/s] | [600 1/s] |
| Beispiel 1 | 119 | 50 |
| Beispiel 2 | 177 | 76 |
| Beispiel 3 | 103 | 45 |
| Beispiel 4 | nicht meßbar/ Sedimentation | |

### Folienherstellung:

In einer Kugelmühle werden 686 Gew.-Teile Trichlorethylen/Ethanol als azeotropes Gemisch vorgelegt, darin 20 Gew.-Teile PVA Isostearinsäureester gelöst, 2000 Gew.-Teile Al₂O₃ Pulver (d₅₀ 2,9 µm) zugefügt und über eine Zeit von 48 h aufbereitet. Anschliessend werden 70 Gew.-Teile PVB (Polyvinylbutyral, handelsüblich, z.B. ®Mowital B 40 H, Hersteller Hoechst AG) und 45 Gew.-Teile eines Weichmachers (z.B. ®Palatinol AH, Hersteller BASF) zugefügt und 24 h homogenisiert. Der erhaltene Schlicker wird im Vakuum entgast und anschließend durch eine Viskositätsmessung charakterisiert. Danach wird der Schlicker nach dem Doctor-blade-Verfahren auf einer Laborgießanlage ausgerakelt und im Gegenluftstrom getrocknet. Die getrocknete Folie wird vom Band entnommen. Aus der Endlosfolie werden Teile ausgestanzt und im Ofen bei 1600 °C gebrannt.

Die Grünfolie wird durch die Gründichte charakterisiert, das gesinterte Teil durch die Sinterdichte. Die Sinterdichte wird nach dem Archimedes-(Auftriebs-)prinzip bestimmt, die Gründichte durch exaktes Vermessen und Auswiegen.

Die Festigkeit der Grünfolie wird bestimmt mit einer Zug-Dehnungsmaschine (Fa. Instron), einer Zuggeschwindigkeit von 50 mm/min an einem Streifen von 15 mm Breite und 15 cm Länge.

Aus Tabelle 2 ist ersichtlich, daß der PVA-Fettsäureester im Schlicker und der Grünfolie vergleichbare Eigenschaften wie das bekannte Dispergiermittel Fischöl aufweist.

Die Vergleichsbeispiele mit Fischöl und ohne Dispergiermittel, wurden wie für die Aufbereitung mit PVA-Ester beschrieben durchgeführt.

**Tabelle 2**

| | Viskosität [in mPa·s] bei 50 1/s | Gründichte [g/cm³] | Schwindung [%] | Sinterdichte [g/cm³] | Festigkeit [MPa] |
|---|---|---|---|---|---|
| PVA-Ester | 3550 | 2,43 | 17,1 | 3,75 | 0,9 |
| Fischöl | 3450 | 2,44 | 17,0 | 3,75 | 1,0 |
| ― | 7300 | 2,35 | 18,4 | 3,73 | 1,8 |

## Patentansprüche

1. Gießmasse enthaltend ein keramisches Pulver, ein organisches Lösungsmittel, Binder, Weichmacher und ein Dispergiermittel, die sich dazu eignet, um nach dem Foliengießverfahren grüne Keramikfolien herzustellen, dadurch gekennzeichnet, daß sie als Dispergiermittel Polyvinylalkoholfettsäureester mit einem Umsetzungsgrad im Bereich von 50 bis 100 % enthält.

2. Gießmasse nach Anspruch 1, dadurch gekennzeichnet, daß sie als Dispergiermittel Polyvinylalkoholfettsäureester mit 8 bis 24 C-Atomen, bezogen auf den Fettsäurerest, enthält.

3. Gießmasse nach Anspruch 2, dadurch gekennzeichnet, daß der Polyvinylalkoholfettsäureester als Fettsäuren Isostearinsäure, Laurinsäure, Linolensäure, Palmitinsäure, Stearinsäure, Ölsäure, Linolsäure oder Arachinsäure enthält.

4. Gießmasse nach Anspruch 1, dadurch gekennzeichnet, daß sie als Lösungsmittel ein Gemisch von Trichlorethylen und Ethanol enthält.

5. Gießmasse nach Anspruch 1, dadurch gekennzeichnet, daß sie als Binder Polyvinylbutyral enthält.

6. Gießmasse nach Anspruch 1, dadurch gekennzeichnet, daß sie als Weichmacher ein Dialkylphthalat, insbesondere Dioctylphthalat, enthält.

7. Gießmasse nach einem der Ansprüche 1 bis 6, dadurch gekennzeichnet, daß sie eine Viskosität im Bereich von 1.500 bis 20.000 mPa·s, gemessen bei 20 °C, besitzt.

8. Gießmasse nach Anspruch 7, dadurch gekennzeichnet, daß sie eine Viskosität im Bereich von 3000 bis 12.000 mPa·s besitzt.

9. Verwendung einer Gießmasse nach einem der Ansprüche 1 bis 8 zur Herstellung einer keramischen Grünfolie durch Vergießen und Trocknen der Gießmasse.

10. Verfahren zur Herstellung eines keramischen Substrats durch thermische Behandlung und Sintern einer keramischen Grünfolie gemäß Anspruch 9.

## Claims

1. A casting composition comprising a ceramic powder, an organic solvent, a binder, a plasticizer and a dispersant, which composition is suitable for producing green ceramic sheets by the tape casting process, wherein the dispersant present is a polyvinyl alcohol/fatty acid ester having a degree of conversion in the range from 50 to 100 %.

2. A casting composition as claimed in claim 1, wherein the dispersant present is a polyvinyl alcohol/fatty acid ester having from 8 to 24 carbon atoms, based on the fatty acid radical.

3. A casting composition as claimed in claim 2, wherein the fatty acids present in the polyvinyl alcohol/fatty acid ester are isostearic acid, lauric acid, linolenic acid, palmitic acid, stearic acid, oleic acid, linoleic acid or arachidic acid.

4. A casting composition as claimed in claim 1, wherein the solvent present is a mixture of trichloroethylene and ethanol.

5. A casting composition as claimed in claim 1, wherein the binder present is polyvinyl butyral.

6. A casting composition as claimed in claim 1, wherein the plasticizer present is a dialkyl phthalate, in particular dioctyl phthalate.

7. A casting composition as claimed in one of claims 1 to 6, which has a viscosity in the range from 1,500 to 20,000 mPa·s, measured at 20°C.

8. A casting composition as claimed in claim 7, which has a viscosity in the range from 3,000 to 12,000 mPa·s.

9. Use of a casting composition as claimed in one of claims 1 to 8 for producing a ceramic green sheet by casting and drying of the casting composition.

10. A process for producing a ceramic substrate by thermal treatment and sintering of a ceramic green sheet as set forth in claim 9.

## Revendications

1. Masse de coulée contenant une poudre céramique, un solvant organique, des liants, des plastifiants et un dispersant, qui convient à la fabrication de feuilles céramiques crues par le procédé de coulée en feuille, caractérisée en ce qu'elle contient en tant que dispersant un ester d'acide gras du poly(alcool vinylique) avec un taux de conversion compris entre 50 et 100 %.

2. Masse de coulée selon la revendication 1, caractérisée en ce qu'elle contient en tant que dispersant un ester d'acide gras du poly(alcool vinylique) ayant de 8 à 24 atomes de carbone par rapport au résidu acide gras.

3. Masse de coulée selon la revendication 2, caractérisée en ce que l'ester d'acide gras du poly(alcool vinylique) contient en tant qu'acides gras de l'acide isostéarique, de l'acide laurique, de l'acide linolénique, de l'acide palmitique, de l'acide stéarique, de l'acide oléique, de l'acide linoléique ou de l'acide arachidique.

4. Masse de coulée selon la revendication 1, caractérisée en ce qu'elle contient en tant que solvant un mélange de trichloréthylène et d'éthanol.

5. Masse de coulée selon la revendication 1, caractérisée en ce qu'elle contient en tant que liant du polyvinylbutyral.

6. Masse de coulée selon la revendication 1, caractérisée en ce qu'elle contient en tant que plastifiant un phtalate de dialkyle, en particulier le phtalate de dioctyle.

7. Masse de coulée selon l'une des revendications 1 à 6, caractérisée en ce qu'elle a une viscosité comprise entre 1500 et 20 000 mPa.s, mesurée à 20°C.

8. Masse de coulée selon la revendication 7, caractérisée en ce qu'elle a une viscosité comprise entre 3000 et 12 000 mPa.s.

9. Utilisation d'une masse de coulée selon l'une des revendications 1 à 8, pour fabriquer une feuille crue céramique par coulée et séchage de la masse de coulée.

10. Procédé pour fabriquer un substrat céramique par traitement thermique et frittage d'une feuille crue céramique selon la revendication 9.
